# EUROPEAN PATENT APPLICATION

(11) **EP 2 604 482 A1**
(43) Date of publication of application: **19.06.2013**
(21) Application number: 11193639.9
(22) Date of filing: 15.12.2011
(51) Int. Cl.: B60S 1/40, B60S 1/38

(54) **Multifunctional adaptor for windshield wiper and assembly using the same**

(71) Applicant: Unipoint Electric MFG. Co., Ltd., Taipei 106 (TW)
(72) Inventor: Chien, Ching-Chuan, Taipei City 106 (TW)
(74) Representative: von Kreisler Selting Werner

(57) **Abstract**

A multifunctional adaptor for windshield wiper (1) and assembly using the same are disclosed. The multifunctional adaptor for windshield wiper (1) includes a main body (11), a lodging device, a first flexible fastening device and a second flexible fastening device. The fastening device is disposed at two sides of a rear end of the main body (11) to hook with a barb portion of a windshield wiper arm (200,400). An arm of the first flexible fastening device is disposed to a front end of the main body (11) to fasten a protrusion portion (201,401) of the windshield wiper arm (200,400). The second flexible fastening device is connected to a side of the main body (11) to lean against an inner side of the windshield wiper arm (200,400) or fasten a leaning side of a through hole of the windshield wiper arm.

## Description

### BACKGROUND OF THE INVENTION

### 1. Field of the Invention

The present invention relates to a multifunctional adaptor for windshield wiper and assembly using the same, and more particularly to a multifunctional adaptor for a windshield wiper and an assembly using the same, which is capable of utilizing two flexible fastening bodies to respectively fasten different styles of windshield wiper arms.

### 2. Description of the Related Art

Automobiles are an important transportation tool, especially in rainy days. The automobiles are not only taken as the means of transportation, but also have effects of keeping out wind and rain more than bicycles or motorcycles.

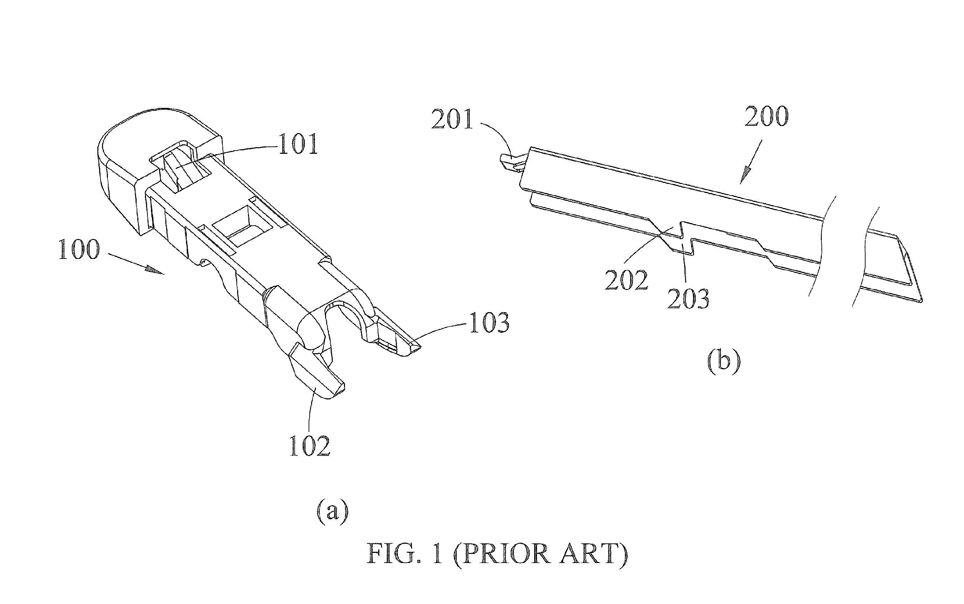

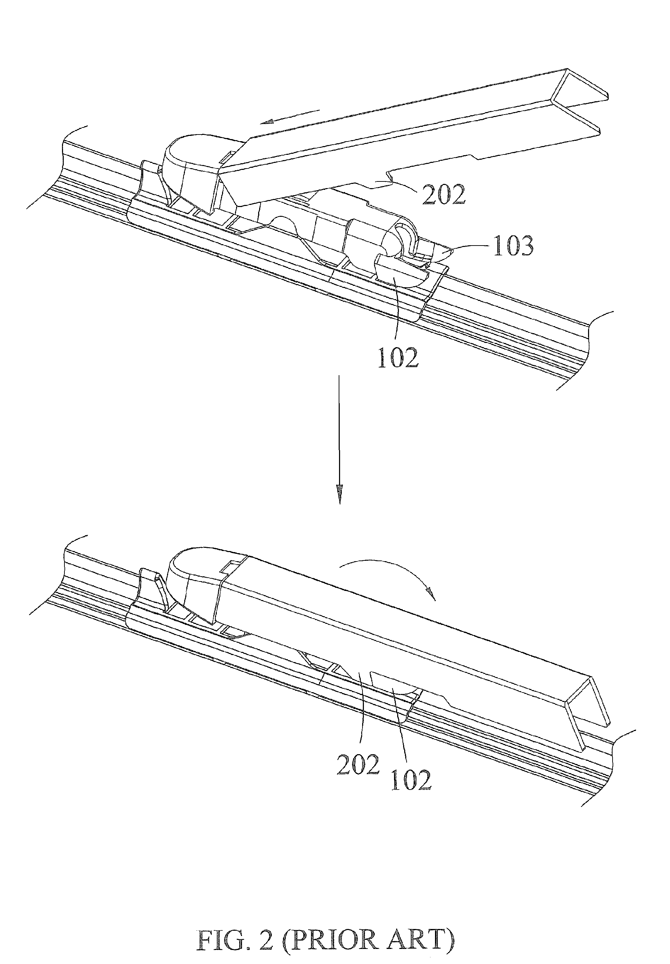

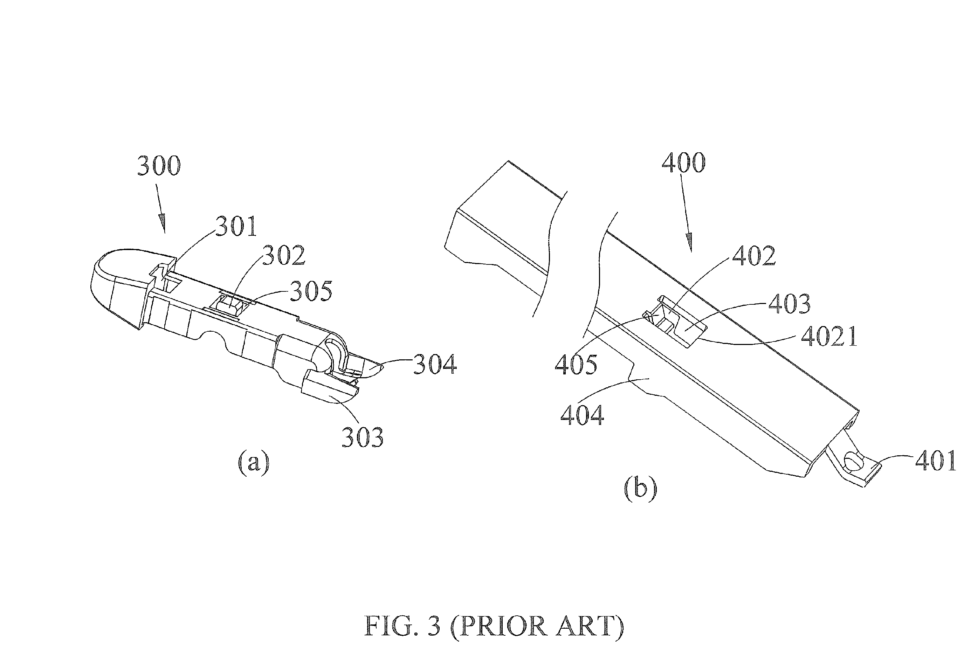

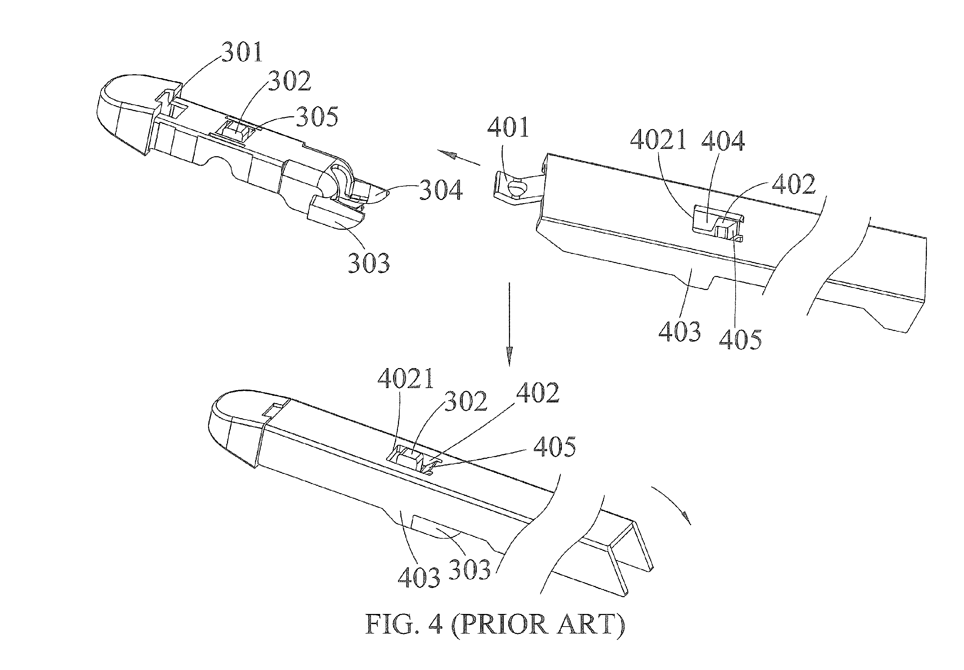

Each automobile is equipped with windshield wipers. The windshield wipers can wipe rainwater during rainy days to enhance the driving safety. The windshield wipers are connected to a windshield wiper motor through a windshield wiper connection assembly to achieve an objective of wiping water drops on a glass surface. Components of the windshield wiper connection assembly include a windshield wiper adaptor and a windshield wiper arm. As shown in FIG 1, a schematic diagram of a conventional windshield wiper adaptor and a windshield wiper arm is depicted. (a) Figure in FIG. 1 is a type of windshield wiper adaptor 100, wherein its front end is designed with a cavity 101 while two sides of its rear end are respectively disposed with fastening components 102, 103 made of hardness materials. (b) of FIG 1 is a type of windshield wiper arm 200, wherein its end is disposed with a protrusion portion 201, and two sides respectively have a first barb portion 202 and a second barb portion 203. When assembling the windshield wiper adaptor 100 and the windshield wiper arm 200, the protrusion portion 201 of the windshield wiper arm 200 is firstly inserted into the cavity 101 in front of the windshield wiper adaptor 100, and the windshield wiper arm 200 is downwardly pressed such that the fastening components 102, 103 at two sides of the rear end of the windshield wiper adaptor 100 are utilized to mutually fasten the first barb portion 202 and the second barb portion 203 of the windshield wiper arm 200, thereby completing the assembly as shown in FIG 2. With reference to FIG. 3 for another conventional windshield wiper adaptor and the windshield wiper arm is depicted. (a) figure of FIG. 3 is another type of windshield wiper adaptor 300, wherein its front end is disposed with a cavity 301, and a surface is disposed with a protrusion block 302, and two sides of its rear end is disposed with fastening components 303, 304 made of hardness materials. A containing space 305 is disposed below the protrusion block 302. (b) of FIG. 3 is another type of windshield wiper arm 400, wherein its end is disposed with a protrusion portion 401, a surface has a through hole 402 piercing through thereof, and the through hole 402 has a leaning side 4021. Two sides of the windshield wiper arm 400 respectively have a first barb portion 403 and a second barb portion 404. Another side of the through hole 402 relative to the leaning side 4021 has a tongue portion 405 that is downwardly recessed. While assembling the type of the windshield wiper adaptor 300 and the windshield wiper arm 400, the protrusion portion 401 of the windshield wiper arm 400 is obliquely inserted into the cavity 301 in front of the windshield wiper adaptor 300 at a certain degree such that the leaning side 4021 of the through hole 402 of the windshield wiper arm 400 smoothly crosses the protrusion block 302 of the windshield wiper adaptor 300 and downwardly presses the windshield wiper arm 400 to allow the protrusion block 302 of the windshield wiper adaptor 300 piercing through the through hole 402 of the windshield wiper ann 400, and the tongue portion 405 of the windshield wiper arm 400 is downwardly embedded to the containing space 305 below the protrusion block 302 of the windshield wiper adaptor 300 and leans against the protrusion block 302 such that the protrusion block 302 of the windshield wiper adaptor 300 is tightly approached to the leaning side 4021 of the through hole 402 of the windshield wiper arm 400. Finally, the fastening components 303, 304 at two sides of the rear end of the windshield wiper adaptor 400 are utilized to mutually fasten the first barb portion 403 and the second barb portion 404 of the windshield wiper arm 400, thereby completing the assembly procedure as shown in FIG. 4.

In the foregoing two prior arts, the two types of windshield wiper adaptors respectively connected to the windshield wiper arm have the following defects:

(1) When a user uses the design of the two conventional windshield wiper adaptors, the first type of windshield wiper can merely match a type of windshield wiper arm and may not connect different types of windshield wiper arms to cause insufficient practicability.

(2) While connecting the windshield wiper adaptor 300 of FIG. 4 and the windshield wiper arm 400, the protrusion portion 401 of the windshield wiper arm 400 must be inserted into the cavity 301 in front of the windshield wiper adaptor 300 at a certain degree to complete the foregoing assembly steps. However, the connected specifically angular range is usually narrow to cause difficulty in assembly, resulting in inconvenience.

(3) While detaching the windshield wiper adaptor 100 of FIG 2 from the windshield wiper arm 200, the user must press the fastening components 102, 103 by single hand. Another hand of the user draws the windshield wiper arm 200 to perform the detachment. While detaching the windshield wiper adaptor 300 of FIG. 4 from the windshield wiper arm 400, the user must impose a force to remove the tongue portion 405 of the windshield wiper arm 400 from the protrusion block 302 of the windshield wiper adaptor 300 at a certain manner, the windshield wiper arm 400 is backwardly and obliquely moved and separated from the windshield wiper adaptor 300 at a certain degree. The complexity in detaching the foregoing two types of windshield wiper adaptors from the windshield wiper arm may be increased to cause inconvenience while in use.

(4) In the foregoing prior arts, the designs for the front ends of the two types of the windshield wiper adaptor are cavities, and the fastening components at the rear ends are hardness materials, the two components are non-movable flexible components or softness components. When the two types of windshield wiper adaptors are respectively assembled to or detached from the windshield wiper arm, a buffer may not be obtained during the fastening components of the windshield wiper adaptors fastened to the barb portions of the windshield wiper arm such that the abrasion between the fastening components and the barb portions is increased. The fastening components may rubs on the barb portion to cause damage after long time use. Consequently, the buckle force is gradually reduced to unstably assemble the windshield wiper adaptor and the windshield wiper arm due to abrasion.

### SUMMARY OF THE INVENTION

In view of the shortcomings of the prior art, the inventor(s) of the present invention based on years of experience in the related industry to conduct extensive researches and experiments, and finally developed a multifunctional adaptor for windshield wiper and assembly using the same as a principle objective to overcome problems of providing a conventional windshield wiper adaptor to merely configure one type of a windshield wiper ann, difficulty in assembly and detachment between the windshield wiper adaptor and the windshield wiper arm and unstable installation between both devices due to abrasion generated by long term use.

To achieve the foregoing objective of the invention, a multifunctional adaptor for windshield wiper is provided and includes a main body, a lodging device, a first flexible fastening device and a second flexible fastening device. The lodging device is disposed at two sides of a rear end of the main body to buckle a barb portion of a windshield wiper arm. The first flexible fastening device is disposed to a front end of the main body to fasten a protrusion portion of the windshield wiper arm. The second flexible fastening device is connected to a surface of the main body to lean against an inner surface of the windshield wiper arm or fasten a leaning side of a through hole of the windshield wiper arm.

The multifunctional adaptor for windshield wiper according to the invention may further include a containing portion connected to the front end of the main body to form a first containing space for containing the first flexible fastening device. The first flexible fastening device may include a first flexible portion and a first fastening portion. The first flexible portion may be connected to the first fastening portion and forms a first cavity. The first fastening portion may further include a first guiding surface. One end of the first flexible portion may be connected to a lower side of the front end of the main body while the other end is extended toward an upper side of the main body and connected to the first fastening portion. The first fastening portion may protrude from the first containing space, and the first guiding surface is toward a rear end of the main body.

A connection place between the main body and the second flexible fastening device may have a second containing space downwardly recessed from the upper side of the main body or pierces through which. The second flexible fastening device may be disposed in the second containing space. The second flexible portion is connected to the second fastening portion and forms a second cavity. The second fastening portion further includes a second guiding surface. An end of the second flexible portion is connected to a side wall of the second containing space of the main body near the lower side thereof while another end is extended toward the upper side of the main body and connected to the second fastening portion. The second fastening portion protrudes the second containing space, and the second guiding surface is toward the front end of the main body.

According to an objective of the invention, an assembly using a multifunctional adaptor for a windshield wiper is provided and includes a windshield wiper adaptor and a windshield wiper arm. The windshield wiper adaptor includes a main body, a first lodging portion, a second lodging portion, a first flexible fastening body and a second flexible fastening body. The first lodging portion and the second lodging portion are disposed at two sides of a rear end of the main body. The first flexible fastening body is disposed to a front end of the main body. The first flexible fastening body includes a first flexible portion and a first fastening portion. The first flexible portion is connected to the first fastening portion, and a first cavity is formed at connection portion thereof. The first fastening portion further includes a first guiding surface. The second flexible fastening body is connected to a surface of the main body. The second flexible fastening body includes a second flexible portion and a second fastening portion. The second flexible portion is connected to the second fastening portion, and a second cavity is formed at a connection place between the second flexible portion and the second fastening portion. The second fastening portion further includes a second guiding surface. A first barb portion and a second barb portion are disposed at two sides of the windshield wiper arm. An end of the windshield wiper arm is disposed with a protrusion portion.

Accordingly, the multifunctional adaptor for windshield wiper and assembly using the same according to the invention have one or more advantages as the following:

(1) The rear and front ends of the multifunctional adaptor for windshield wiper according to the invention are equipped with flexible fastening devices to assemble different types of windshield wiper arms, thereby having practicability by comparing with prior arts.

(2) The multifunctional adaptor for windshield wiper according to the invention mainly utilizes the first flexible fastening device and the second flexible fastening device to respectively fasten different types of windshield wiper arms. The first flexible fastening device and the second flexible fastening device are components capable of performing flexible deformation motions such that when the multifunctional windshield wiper adaptor according to the invention is connected to any type of windshield wiper arm, both components are not limited by configuration angles to achieve more convenient during utilization and installation.

(3) The multifunctional adaptor for windshield wiper according to the invention mainly utilizes the first flexible fastening device and the second flexible fastening device capable of being deformed to fasten different types of windshield wiper arm, and the first flexible fastening device and the second flexible fastening device are located on the multifunctional windshield wiper adaptor. Therefore, while detaching the multifunctional windshield wiper adaptor from different types of windshield wiper arms, the user can easily detach the multifunctional windshield wiper adaptor from each windshield wiper arm by merely stirring the first flexible fastening device or the second flexible fastening device, thereby increasing the convenience.

(4) The flexible fastening devices designed on the rear end or the front end of the multifunctional windshield wiper adaptor according to the invention can movably perform the flexible deformation. When the multifunctional windshield wiper adaptor is assembled to any windshield wiper arm, a buffer is obtained between the lodging devices of the multifunctional windshield wiper adaptor and the barb portion of the windshield wiper arm through the flexible fastening devices to effectively reduce the abrasion between the lodging devices and the barb portions such that the lodging devices can be prevented from being rubbed against the barb portions to result in abrasion.

### BRIEF DESCRIPTION OF THE DRAWINGS

FIG. 1 is a schematic diagram of a conventional windshield wiper adaptor and a windshield wiper arm;

FIG 2 is a schematic diagram of assembling the windshield wiper adaptor and the windshield wiper arm according to FIG. 1;

FIG. 3 is a schematic diagram of another conventional windshield wiper adaptor and a windshield wiper arm;

FIG. 4 is a schematic diagram of assembling the windshield wiper adaptor and the windshield wiper arm according to FIG. 3;

FIG. 5 is a first schematic diagram of a multifunctional windshield wiper adaptor according to an embodiment of the invention;

FIG. 6 is a second schematic diagram of a multifunctional windshield wiper adaptor according to an embodiment of the invention;

FIG. 7 is a first schematic diagram of a multifunctional windshield wiper adaptor assembled to the windshield wiper arm of FIG. 1 according to the embodiment of the invention;

FIG. 8 is a second schematic diagram of a multifunctional windshield wiper adaptor assembled to the windshield wiper arm of FIG. 1 according to the embodiment of the invention;

FIG 9 is a third schematic diagram of a multifunctional windshield wiper adaptor assembled to the windshield wiper ann of FIG. 1 according to the embodiment of the invention;

FIG. 10 is a fourth schematic diagram of a multifunctional windshield wiper adaptor assembled to the windshield wiper arm of FIG 1 according to the embodiment of the invention;

FIG. 11 is a first schematic diagram of a multifunctional windshield wiper adaptor detached from the windshield wiper arm of FIG. 1 according to the embodiment of the invention;

FIG. 12 is a second schematic diagram of a multifunctional windshield wiper adaptor detached from the windshield wiper arm of FIG 1 according to the embodiment of the invention;

FIG. 13 is a third schematic diagram of a multifunctional windshield wiper adaptor detached from the windshield wiper arm of FIG. 1 according to the embodiment of the invention;

FIG. 14 is a first schematic diagram of a multifunctional windshield wiper adaptor assembled to the windshield wiper arm of FIG 3 according to the embodiment of the invention;

FIG. 15 is a second schematic diagram of a multifunctional windshield wiper adaptor assembled to the windshield wiper arm of FIG. 3 according to the embodiment of the invention;

FIG 16 is a third schematic diagram of a multifunctional windshield wiper adaptor assembled to the windshield wiper arm of FIG. 3 according to the embodiment of the invention;

FIG. 17 is a fourth schematic diagram of a multifunctional windshield wiper adaptor assembled to the windshield wiper arm of FIG. 3 according to the embodiment of the invention;

FIG. 18 is a first schematic diagram of a multifunctional windshield wiper adaptor detached from the windshield wiper arm of FIG. 3 according to the embodiment of the invention;

FIG 19 is a second schematic diagram of a multifunctional windshield wiper adaptor detached from the windshield wiper arm of FIG 3 according to the embodiment of the invention; and

FIG. 20 is a third schematic diagram of a multifunctional windshield wiper adaptor detached from the windshield wiper arm of FIG. 3 according to the embodiment of the invention.

### DETAILED DESCRIPTION OF THE PREFERRED EMBODIMENTS

The foregoing and other technical characteristics of the present invention will become clear with the detailed description of the preferred embodiments and the illustration of the related drawings.

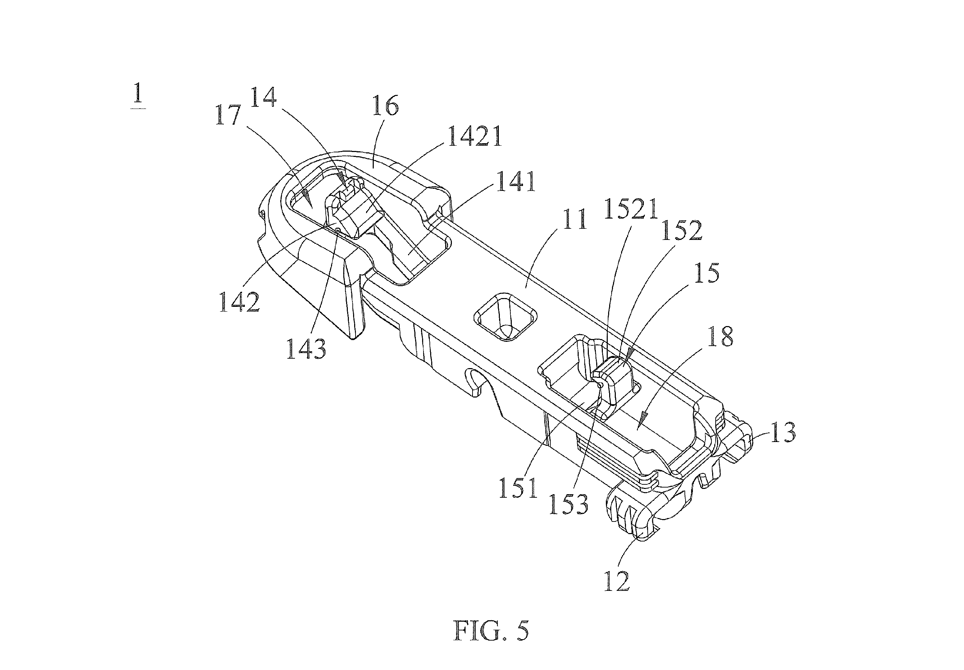

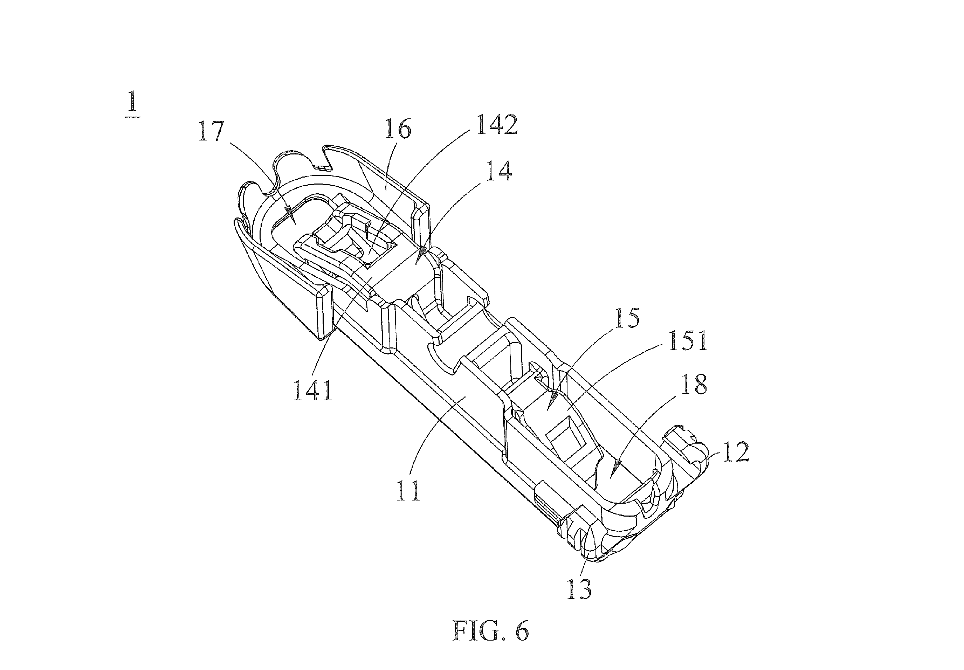

With reference to FIG. 5 and FIG. 6 for a first schematic diagram and a second schematic diagram of a multifunctional windshield wiper adaptor according to an invention are depicted. The first schematic diagram is a 3D top-view drawing of a multifunctional windshield wiper adaptor 1, and a second schematic diagram is a 3D bottom-view drawing of the multifunctional windshield wiper adaptor 1. The multifunctional windshield wiper adaptor 1 of the invention includes a main body 11, a first lodging portion 12, a second lodging portion 13, a first flexible fastening body 14, a second flexible fastening body 15 and a containing portion 16. The main body 11 can, but not limited to, be a rectangular structure. The first lodging portion 12 and the second lodging portion 13 can be respectively disposed to two side surfaces at a rear end of the main body 11. The containing portion 16 can be connected to a front end of the main body 11 and defines a first containing space 17 for containing the first fastening body 14 together with the main body 11. In the embodiment, the containing portion 16 is a U-shaped structure and can, but not limited to, be other structures capable of defining the first containing space 16 during the actual implementation. The first flexible fastening body 14 includes a first flexible portion 141 and a first fastening portion 142. One end of the first flexible portion 141 can be connected to a lower side of the rear end of the main body 1 while another end of the first flexible portion 141 is upwardly extended toward an upper side of the main body 11 and connected to the first fastening portion 142. The first fastening portion 142 protrudes the first containing space 17, and a first guiding surface 1421 of the first fastening portion 142 is toward the rear end of the main body 11. A first recess place 143 is forme at an intersection between the first flexible portion 141 and the first fastening portion 142. A face of the main body 11 further has a second containing space 18, which is downwardly recessed from the upper side or pierces through, for containing the second flexible fastening body 15. The second flexible fastening body 15 includes a second flexible portion 151 and a second fastening portion 152. The second fastening portion 152 further has a second guiding surface 1521. One end of the second flexible portion 151 is disposed to a side wall surface of the second containing space 18 that is near the lower side thereof while another end is extended toward an upper side of the main body 31 and connected to the second fastening portion 352. The second fastening portion 152 protrudes the second containing space 18, and the second guiding surface 1521 is toward a direction of a front end of the main body 11. A second cavity 153 is formed at an intersection that is in contact between the second flexible portion 151 and the second fastening portion 152. The first guiding surface 1421 and the second guiding surface 1521 are tilt planes and can be other patterns, such as circular arc planes, ladder planes, etc, during actual implementation. In subsequent depiction, the first lodging portion 12 and the second lodging portion 13 are called as a fastening device. The first flexible fastening body 14 is also called the first flexible fastening device. The second flexible fastening body 15 is also called the second flexible fastening device.

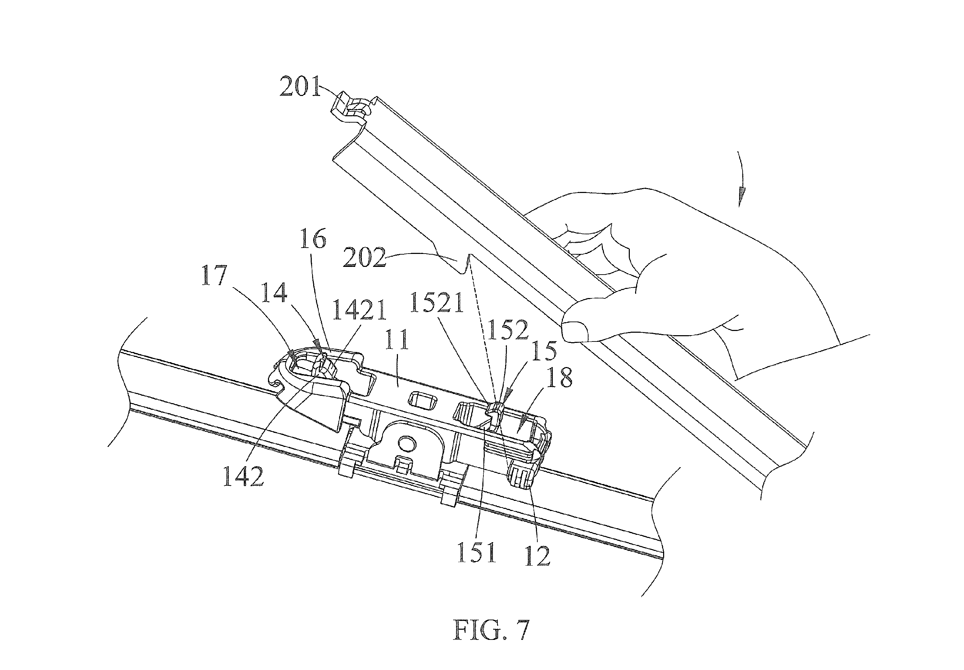

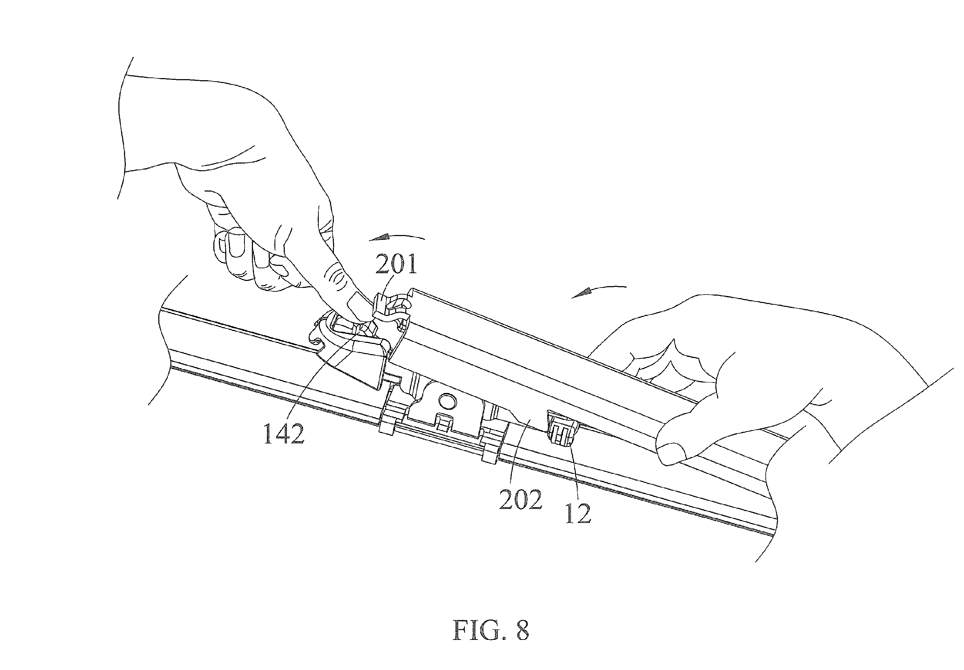

With reference to FIG. 7 to FIG. 10 for a first schematic diagram, a second schematic diagram, a third schematic diagram and a fourth schematic diagram of a multifunctional windshield wiper adaptor assembled with a windshield wiper arm of FIG. 1 are depicted. In the embodiment, a lower side of the multifunctional windshield wiper adaptor 1 has been equipped with a windshield wiper. When a user would like to assemble the multifunctional windshield wiper adaptor 1 with the windshield wiper arm 200, the windshield wiper arm 200 is firstly placed on the multifunctional windshield wiper adaptor 1, a protrusion portion 201 of the windshield wiper arm 200 is toward a front end of the main body 11 of the multifunctional windshield wiper adaptor 1. Next, a first barb portion 202 and a second barb portion 203 of the windshield wiper arm 200 are respectively hooked with the first lodging portion 12 and the second lodging portion 13 of the multifunctional windshield wiper adaptor 1. Next, taking a hooking portion of the windshield wiper arm 200 as an axis, a front end of the protrusion portion 201 of the windshield wiper arm 200 is downwardly rotated. In the meantime, the protrusion portion 201 of the windshield wiper arm 200 is gradually approached to the first flexible fastening body 14 of the multifunctional windshield wiper adaptor 1. When the protrusion portion 201 of the windshield wiper arm 200 is in contact with the first guiding surface 1421 of the first fastening portion 142 of the first flexible fastening body 14 and continuously and downwardly rotated to lean against the first guiding surface 1421, the first flexible portion 141 of the first flexible fastening body 14 performs flexible reformation motion that is distant from a direction of the protrusion portion 201 due to a push force generated by the downward pressed windshield wiper arm 200. When the protrusion portion 201 of the windshield wiper arm 200 crosses the first fastening portion 142 through the guiding of the first guiding surface 1421, it would downwardly slide to the first flexible portion 141 and the first cavity 143 connected to the first fastening portion 142. In the meantime, since the protrusion portion 201 of the windshield wiper arm 200 is no longer to push the first fastening portion 142 of the first flexible fastening body 14. The first flexible portion 141 of the first flexible fastening body 14 flexibly restored from the deformed state such that the protrusion portion 201 of the windshield wiper arm 200 leans against the first cavity 143, and since the first fastening portion 142 of the first flexible fastening body 14 is buckled with the protrusion portion 201, the second fastening body 152 of the second flexible fastening body 15 leans against an inner surface of the main body 11. Accordingly, a fastening motion of fastening the windshield wiper arm 200 on the multifunctional windshield wiper adaptor 1 is completed.

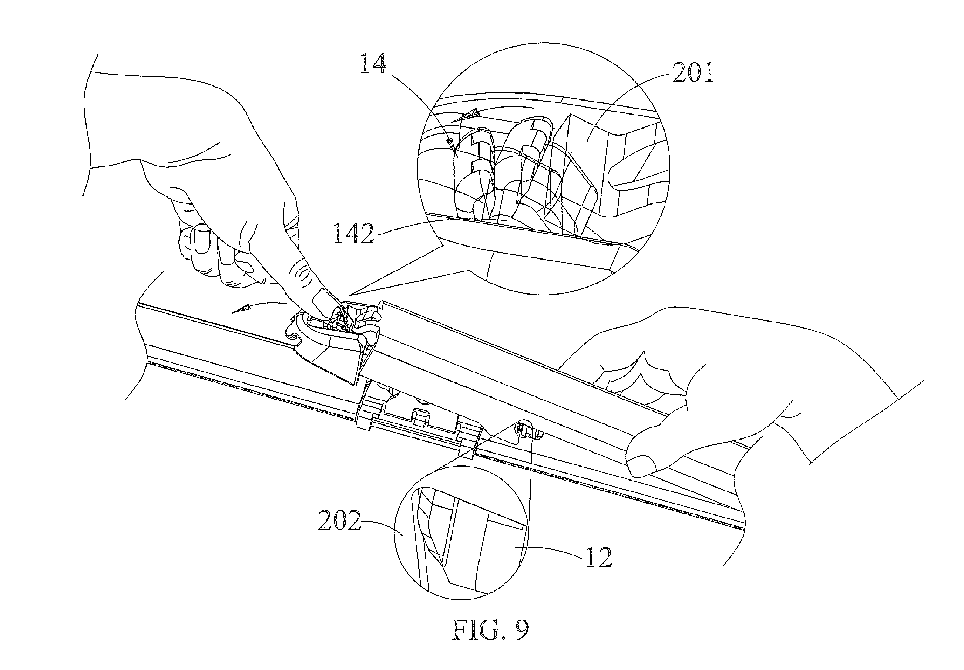

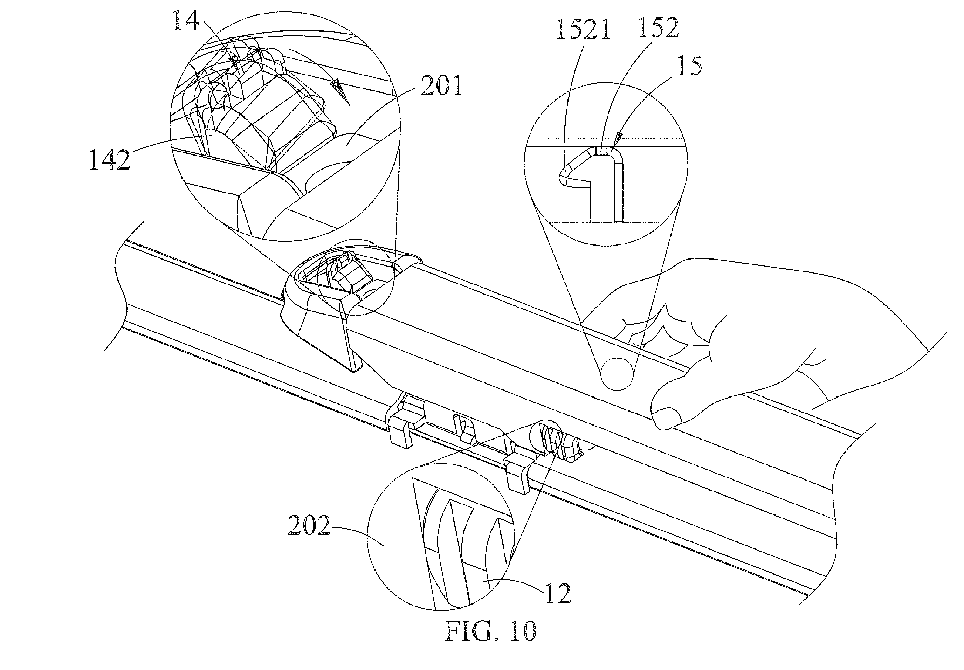

In the embodiment, since the multifunctional windshield wiper adaptor 1 of the invention uses the first flexible fastening body 14 made of a flexible material to buckle the protrusion portion 201 of the windshield wiper arm 200, a size of the first containing space 17 can allow the first flexible fastening body 14 to perform the flexible deformation motion at a certain degree such that the protrusion portion 201 of the windshield wiper arm 200 can be facilitated crossing the first fastening portion 142 of the first flexible fastening body 14. Accordingly, the user can easily assemble the windshield wiper arm 200 to the multifunctional windshield wiper adaptor 1 without imposing powerful force and does not need to consider the assembly angle between both devices. A little interval is also remained between the first barb portion 202 and the second barb portion 203 of the windshield wiper arm 200 and the first lodging portion 12 and the second lodging portion 13 of the multifunctional windshield wiper adaptor 1 during the assembly process as shown in FIG. 9. Accordingly, the first lodging portion 12 and the second lodging portion 13 can be prevented from powerfully leaning against the first barb portion 201 and the second barb portion 203, resulting in the abrasion of the first lodging portion 12 and the second lodging portion 13. While completing the connection between the windshield wiper arm 200 and the multifunctional windshield wiper adaptor 1, the first lodging portion 12 and the second lodging portion 13 of the multifunctional windshield wiper adaptor 1 can lean against the first barb portion 202 and the second barb portion 203 of the windshield wiper arm 200 to prevent the windshield wiper arm 200 from downwardly sliding toward a rear direction of the main body 11 of the multifunctional adaptor 1. The first flexible fastening body 14 of the multifunctional windshield wiper adaptor 1 does not only lean against the windshield wiper arm 200 to prevent the windshield wiper arm 200 from downwardly sliding toward a front direction of the main body 11 of the multifunctional windshield wiper adaptor 1, but also prevents the windshield wiper arm 200 from coming off an upper direction of the main body 11 of the windshield wiper adaptor 1 through the first fastening portion 142 of the first flexible fastening body 14 buckled to the protrusion portion 201 of the windshield wiper arm 200. The second flexible fastening body 15 of the multifunctional windshield wiper adaptor I can lean against the inner surface of the windshield wiper arm 200 to further fasten the fastening between the multifunctional windshield wiper adaptor 1 and the windshield wiper arm 200 as shown in FIG. 10.

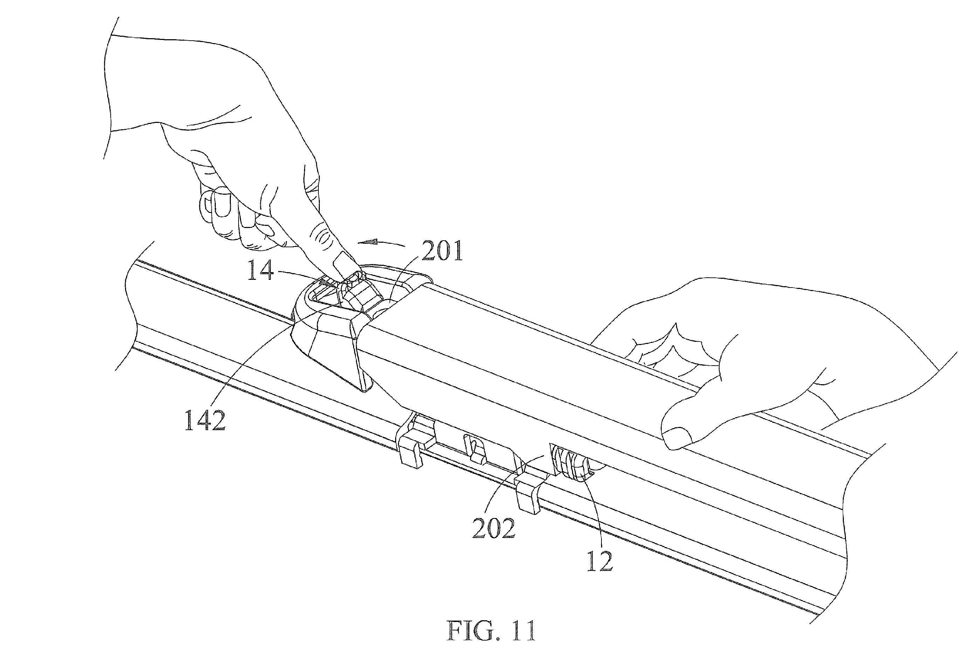

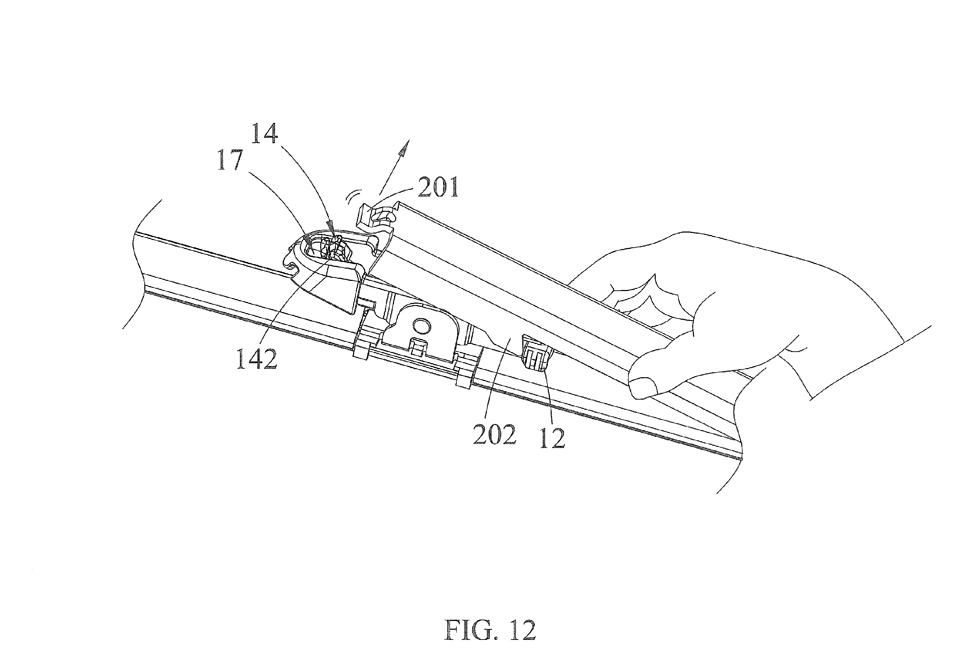

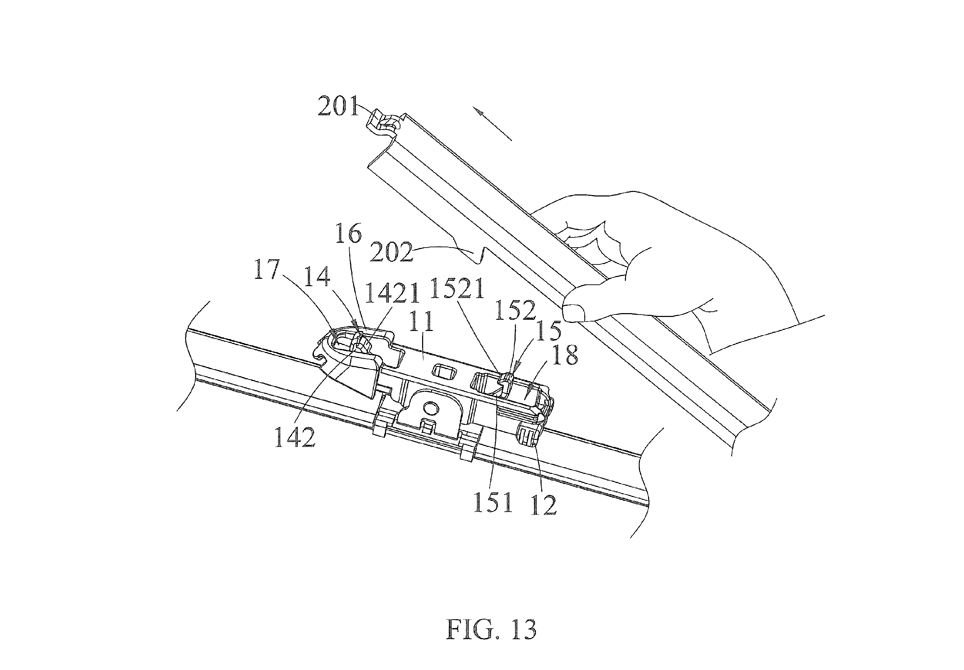

With reference to FIG. 11 to FIG. 13 for a first schematic diagram, a second schematic diagram and a third schematic diagram of the multifunctional windshield wiper adaptor detached from the windshield wiper arm of FIG. 1 are depicted. In the embodiment, when the user would like to detach the windshield wiper arm 200 from the multifunctional windshield wiper adaptor 1, the first flexible fastening body 14 of the multifunctional windshield wiper adaptor 1 is moved by merely using fingers such that the protrusion portion 201 of the windshield wiper arm 200 is upwardly sprung to easily detach both devices.

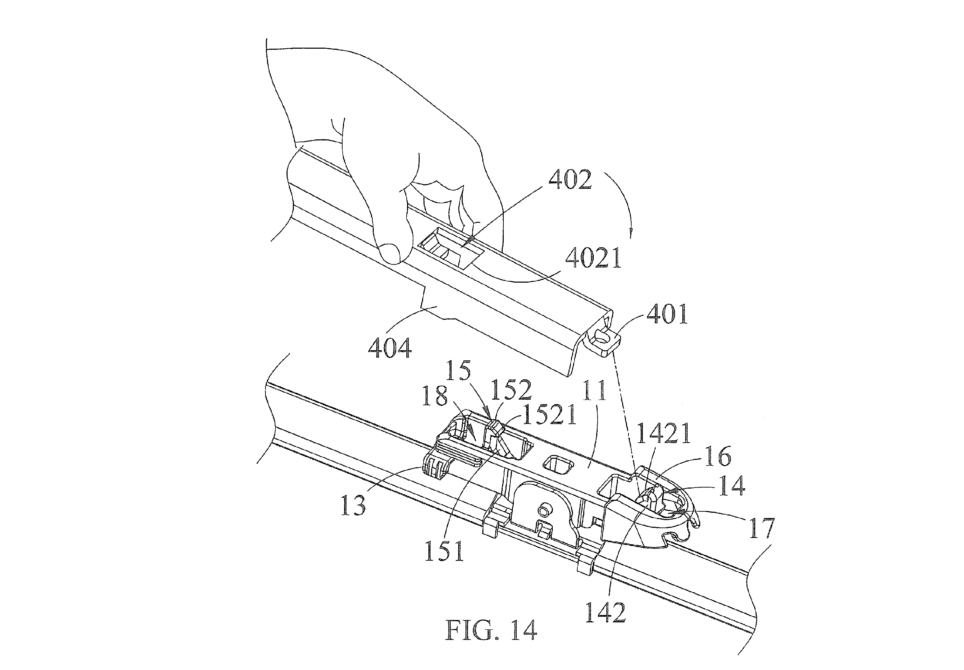

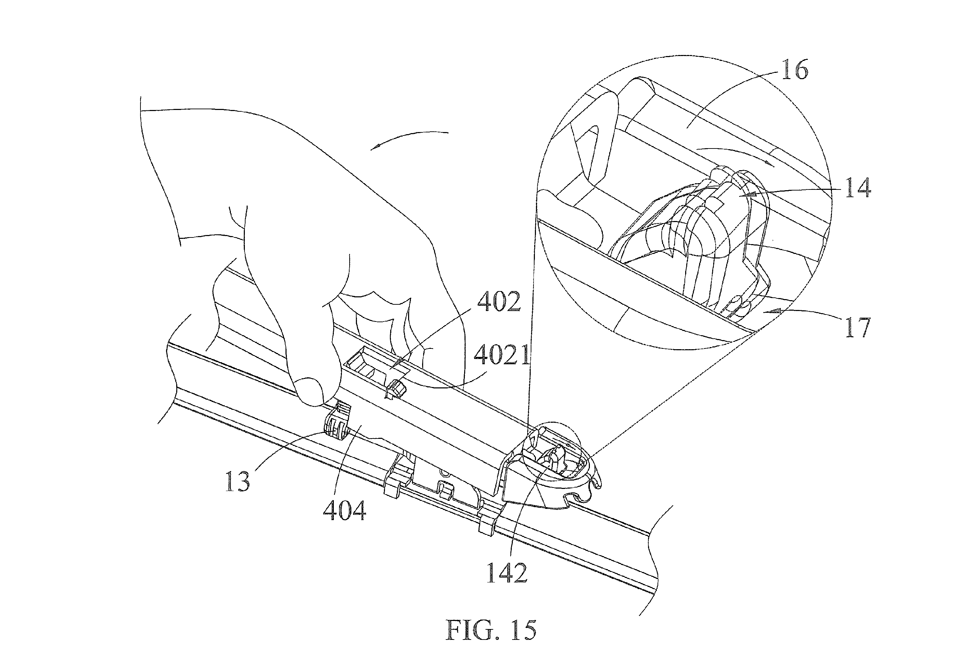

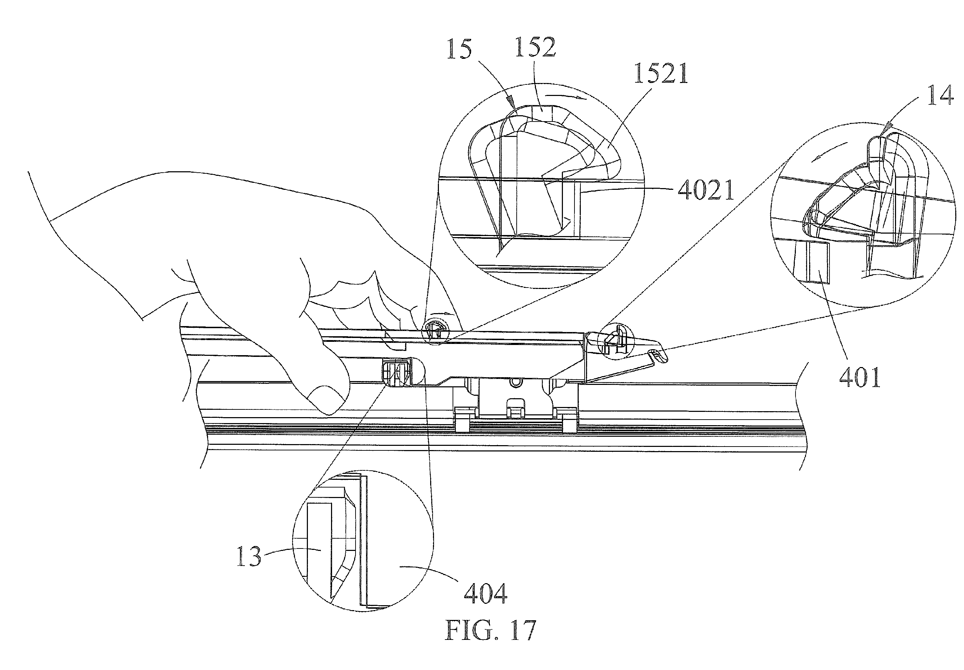

Reference to FIG. 14 to FIG. 17 for a first schematic diagram, a second schematic diagram and a third schematic diagram of the multifunctional windshield wiper adaptor assembled to the windshield wiper arm of FIG. 3 are depicted. In the embodiment, a lower portion of the multifunctional windshield wiper adaptor 1 has been equipped with a windshield wiper. When the user would like to assemble the multifunctional windshield wiper adaptor 1 to the windshield wiper arm 400, the windshield wiper arm 400 can be firstly placed on the multifunctional windshield wiper adaptor 1 to allow the protrusion portion 401 of the windshield wiper arm 400 to be toward the front end of the main body 11 of the multifunctional windshield wiper adaptor 1. Next, the protrusion portion 401 of the windshield wiper arm 400 leans against the first flexible fastening body 14 in front of the main body 11 of the multifunctional windshield wiper adaptor 1. The first flexible fastening body 14 performs deformation that is distant from a direction of the protrusion portion 401. Subsequently, taking the leaning portion between the protrusion portion 401 of the windshield wiper arm 400 and the first flexible fastening body 14 as an axis, a rear end of the windshield wiper arm 400 is downwardly rotated. In the meantime, a through hole 402 of the windshield wiper arm 400 is gradually approached to the second flexible fastening body 15 of the multifunctional windshield wiper adaptor 1. When a leaning side 4021 of the through hole 402 of the windshield wiper arm 400 is in contact with the second guiding surface 1521. of the second fastening portion 152 of the second flexible fastening body 15 and continuously and downwardly rotated to lean against the second guiding surface 1521, the second flexible portion 151 of the second flexible fastening body 15 performs deformation motion that is distant from a direction of the leaning side 4021 due to the pushing force generated by the downwardly pressed windshield wiper arm 400. When the leaning side 4021 of the through hole 402 of the windshield wiper arm 400 crosses the second fastening portion 152 through the guiding of the second guiding surface 1521, it would downwardly slide to the second flexible portion 151 and the second cavity 153 connected to the second fastening portion 152. In the meantime, since the leaning side 4021 of the through hole 402 of the windshield wiper arm 400 is no longer to push the second fastening portion 152 of the second flexible fastening portion 15, the second flexible portion 151 of the second flexible fastening body 15 is restored from the deformed state such that the leaning side 4021 of the through hole 402 of the windshield wiper arm 400 leans against the second cavity 153, and the second fastening portion 152 of the second flexible fastening body 15 is buckled to a portion of an upper top at the leaning side 4021 of the through hole 402 of the windshield wiper arm 400. Meanwhile, the first flexible fastening device 14 is fastened with the protrusion portion 401 through the first fastening portion 142 after restoring from the deformed state. Accordingly, a buckling motion of fastening the windshield wiper arm 400 to the multifunctional windshield wiper adaptor 1 can be completed. When the second fastening portion 152 of the second flexible fastening body 15 is buckled to the leaning side 4021 of the windshield wiper arm 400, and when the first fastening portion 142 of the first flexible fastening body 14 is buckled with the protrusion portion 401 of the windshield wiper arm 400, the first lodging portion 12 and the second lodging portion 13 of the multifunctional windshield wiper adaptor 1 respectively correspond to the first barb portion 403 and the second barb portion 404 of the windshield wiper arm 400.

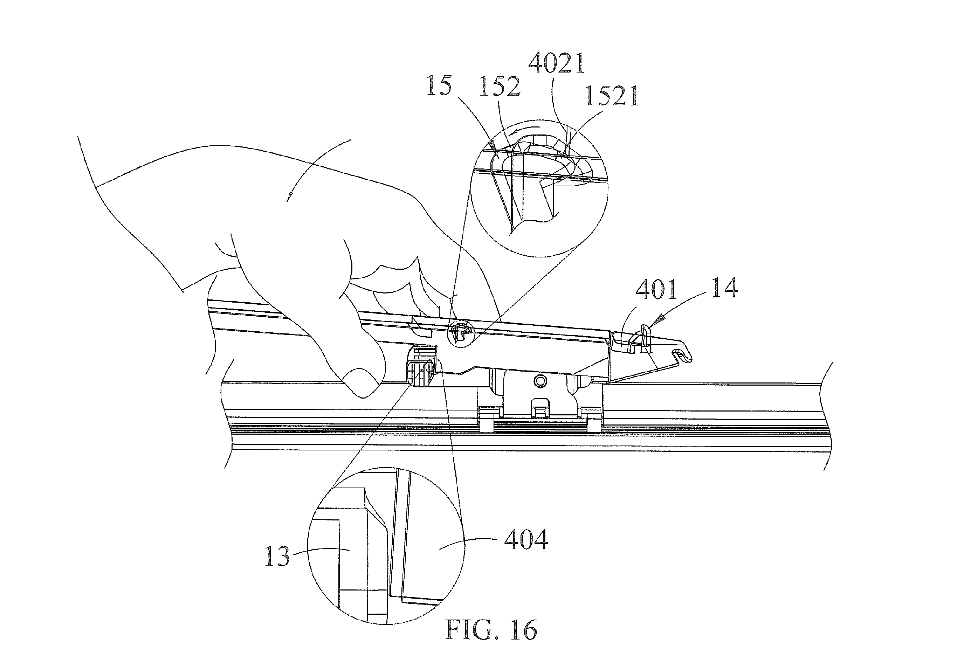

In the embodiment, since the multifunctional windshield wiper adaptor 1 uses the second flexible fastening body 15 made of a flexible material to buckle a portion of the top at the leaning side 4021 of the through hole 402 of the windshield wiper arm 400, a size of the second containing space 18 can allow the second flexible fastening body 15 to perform flexible deformation motion at a certain degree such that the leaning side 4021 of the through hole 402 of the windshield wiper arm 400 crosses the second fastening portion 152 of the second flexible fastening body 15, and the first flexible fastening body 14 in front of the multifunctional windshield wiper adaptor 1 can be a flexible material capable of being deformed. Accordingly, the user can easily assemble the windshield wiper arm 400 to the multifunctional windshield wiper adaptor 1 without imposing powerful force and taking angular range into account. Moreover, a fewer interval is remained between the first barb portion 403 and the second barb portion 404 of the windshield wiper arm 400 and the first lodging portion 12 and the second lodging portion 13 of the multifunctional windshield wiper adaptor 1 during the assembly process as shown in FIG. 16. Accordingly, the first barb portion 403 and the second barb portion 404 can be prevented from powerfully leaning against and being in contact with the first lodging portion 12 and the second lodging portion 13, resulting in the abrasion of the first lodging portion 12 and the second lodging portion 13. When the connection between the windshield wiper arm 400 and the multifunctional windshield wiper adaptor 1 is completed, the first lodging portion 12 and the second lodging portion 13 of the multifunctional windshield wiper adaptor 1 can lean against the first barb portion 403 and the second barb portion 404 of the windshield wiper arm 400 to prevent the windshield wiper arm 400 from downwardly sliding toward a rear direction of the main body 11 of the multifunctional windshield wiper adaptor 1. The first flexible fastening body 14 of the multifunctional windshield wiper adaptor 1 can fasten the protrusion portion 401 of the windshield wiper arm 400 to prevent the windshield wiper arm 400 from downwardly sliding toward a front direction of the main body 11 of the multifunctional windshield wiper adaptor 1. The second flexible fastening body 15 of the multifunctional windshield wiper adaptor 1 is buckled to a portion of the top of the windshield wiper arm 400 to prevent the windshield wiper arm 400 from coming off toward an upper direction of the main body 11 of the multifunctional windshield wiper adaptor 1. With multi-point fastens between the multifunctional windshield wiper adaptor 1 and the windshield wiper arm 400, both can be stably fastened without coming off.

In the foregoing depiction, manners of assembling the multifunctional windshield wiper adaptor 1 and the windshield wiper arm 400 according to the invention is, but not limited to, only an embodiment. While assembling the multifunctional windshield wiper adaptor 1 and the windshield wiper arm 400, the assembly as well as the manner of assembling the multifunctional windshield wiper adaptor 1 and the windshield wiper arm 200 of FIG. 1 can be performed. The user can downwardly press the windshield wiper arm 400 after the first barb portion 402 and the second barb portion 403 at the rear end of the windshield wiper arm 400 are respectively buckled with the first lodging portion 12 and the second lodging portion 13 of the multifunctional windshield wiper adaptor 1 such that the leaning side 4021 of the through hole 402 of the windshield wiper arm 400 leans against the second flexible fastening body 15 of the multifunctional windshield wiper adaptor 1, and the protrusion portion 401 of the windshield wiper arm 400 leans against the first flexible fastening body 14. After the first flexible fastening body 14 and the second flexible fastening body 15 perform the deformation toward a direction, the assembly of the multifunctional windshield wiper adaptor 1 and the windshield wiper arm 400 can be completed through the first flexible fastening body 14 and the second flexible fastening body 15 respectively buckled with the protrusion portion 401 and the leaning side 4021 of the through hole 402.

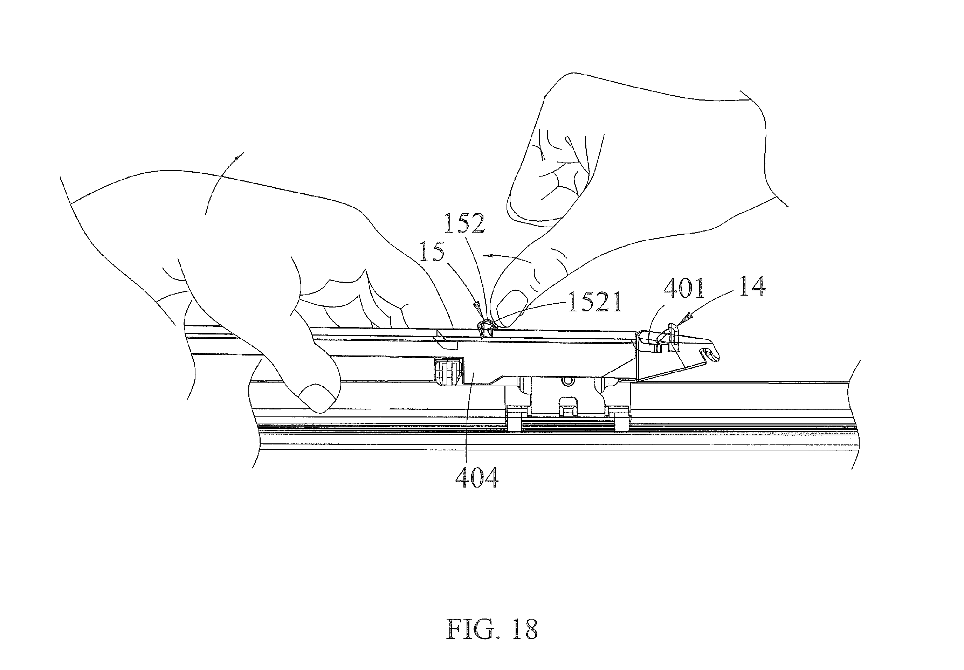

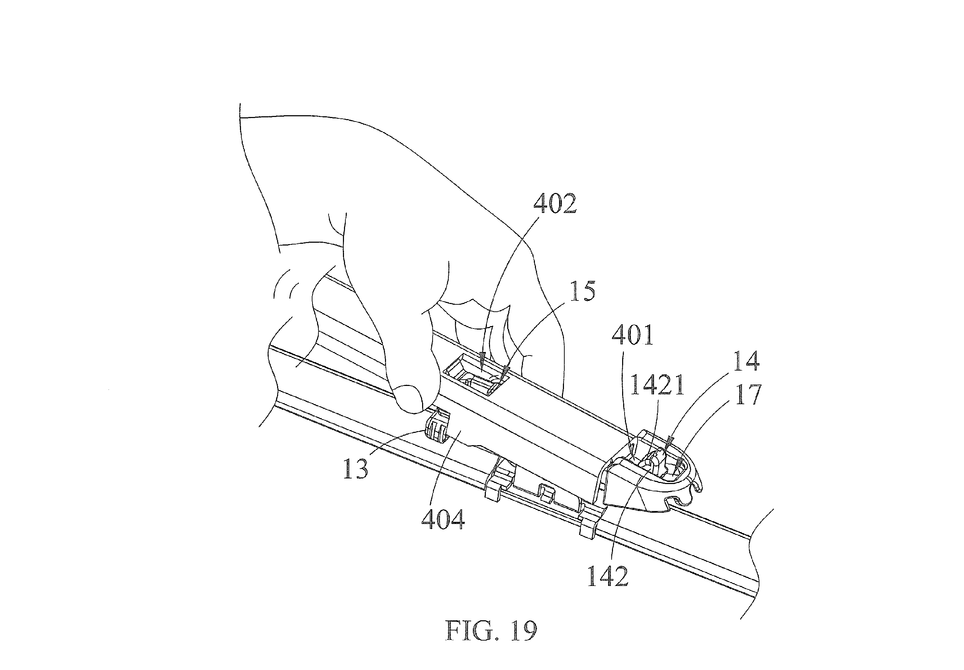

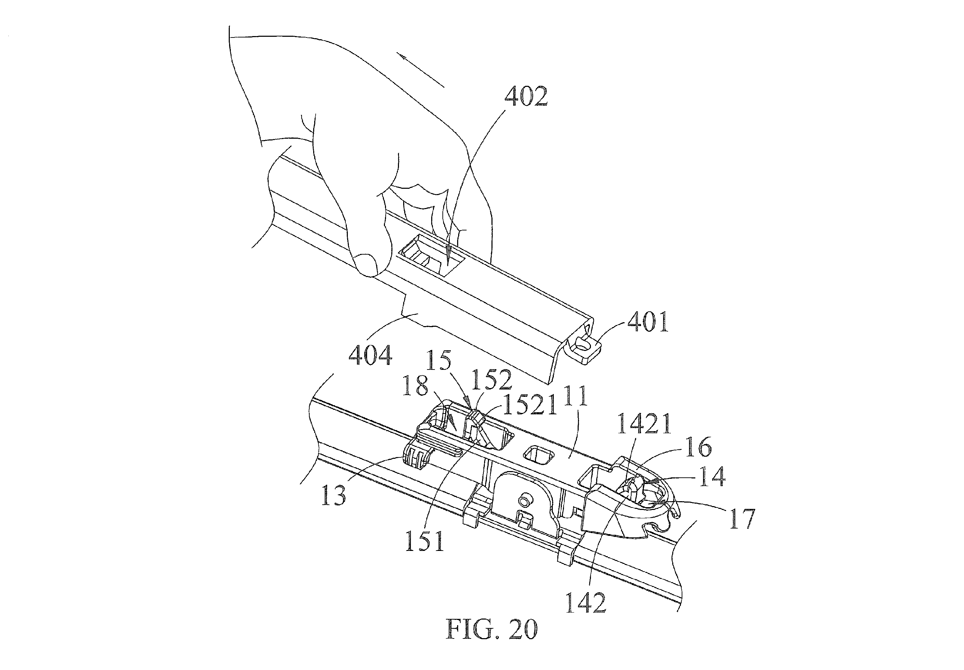

With reference to FIG. 18 to FIG. 20 for a first schematic diagram, a second schematic diagram and a third schematic diagram of the multifunctional windshield wiper adaptor detached from the windshield wiper arm of FIG. 3 are depicted. In the embodiment, when the user would like to detach the windshield wiper arm 400 and the multifunctional windshield wiper adaptor 1, the portion of the through hole 402 of the windshield wiper arm 400 can be separated from the second flexible fastening body 15 of the multifunctional windshield wiper adaptor 1 by merely stirring the second flexible fastening body 15 of the multifunctional windshield wiper adaptor 1 via fingers, and the first barb portion 403 and the second barb portion 404 at the rear end of the windshield wiper arm 400 come off the first lodging portion 12 and the second lodging portion 13 of the multifunctional windshield wiper adaptor 1 such that both devices can be easily detached after a rear portion of the windshield wiper arm 400 is upwardly sprung.

The multifunctional windshield wiper adaptor 1 according to the invention can be assembled to the windshield wiper arms 200 and 400. By comparing with prior arts, the multifunctional windshield wiper adaptor 1 has practicability, and the user can conveniently assemble the multifunctional windshield wiper adaptor 1 and the conventional windshield wiper arms 200 or 400 under a condition of no limiting at angles. While performing the motion of detaching the windshield wiper arms 200 and 400 from the windshield wiper adaptor 1, the windshield wiper arms 200 or 400 can be easily detached from the multifunctional windshield wiper adaptor 1 by merely stirring the first flexible fastening body 14 or the second flexible fastening body 15 of the multifunctional windshield wiper adaptor 1. Regardless of the assembly or detachment, the mechanism is very convenient. The windshield wiper arms 200 or 400 can be stably connected to the multifunctional windshield wiper adaptor 1 through the first flexible fastening body 14 or the second flexible fastening body 15 of the multifunctional windshield wiper adaptor 1 fastened with the windshield wiper arms 200 or 400 and the first lodging portion 12 and the second lodging portion 13 of the multifunctional windshield wiper adaptor 1 mutually lean against the first barb portions 202, 403 and the second barb portions 203, 404 of the windshield wiper arms 200, 400. Further, since the first flexible fastening body 14, the second flexible fastening body 15, the first lodging portion 12 and the second lodging portion 13 are components made of flexible materials, the first flexible fastening body 14 and the second flexible fastening body 1 can perform flexible deformation at a direction. Accordingly, while assembling or detaching the windshield wiper arms 200 or 400 and the multifunctional windshield wiper adaptor 1, a buffer can be obtained to greatly reduce the first lodging portion 12 and the second lodging portion 13 from being damaged by the first barb portions 202, 403 and the second barb portions 203, 404 of the windshield wiper arms 200, 400. The multifunctional windshield wiper adaptor 1 of the invention does not only provide the assembly two windshield wiper arms 200 and 400, but also provides the preferable embodiment. The multifunctional windshield wiper adaptor 1 capable of being assembled to the windshield wiper arms should not be limited by the foregoing examples.

The invention improves over the prior art and complies with patent application requirements, and thus is duly filed for patent application. While the invention has been described by device of specific embodiments, numerous modifications and variations could be made thereto by those generally skilled in the art without departing from the scope and spirit of the invention set forth in the claims.

## Claims

1. A multifunctional adaptor for windshield wiper (1) comprising:
a main body (11);
a lodging device, disposed to two sides of a rear end of the main body (11), for buckling a barb portion of a windshield wiper arm (200, 400);
a first flexible fastening device, disposed to a front end of the main body (11), for leaning against and fastening a protrusion portion (201, 401) of the windshield wiper arm (200,400); and
a second flexible fastening device, connected to a surface of the main body (11), for leaning against an inner surface of the windshield wiper arm (200, 400) or fastening a leaning side of a through hole (402) of the windshield wiper arm (200, 400).

2. The multifunctional adaptor for windshield wiper (1) as recited in claim 1, further comprising a containing portion (16), connected to the front end of the main body (11) to form a first containing space (17) for containing the first flexible fastening device.

3. The multifunctional adaptor for windshield wiper (1) as recited in claim 2, wherein the first flexible fastening device includes a first flexible portion (141) and a first fastening portion (142), and the first flexible portion (141) is connected to the first fastening portion (142) and form a first cavity (143), and the first fastening portion (142) further includes a first guiding surface (1421), and one end of the first flexible portion (141) is connected to a lower side of a front end of the main body (11) while the other end of the first flexible portion (141) is extended toward an upper side of the main body (11) and connected to the first fastening portion (142), and the first fastening portion (142) protrudes from the first containing space (17), and the first guiding surface (1421) is toward the rear end of the main body (11).

4. The multifunctional adaptor for windshield wiper (1) as recited in claim 1, wherein a connection place between the main body (11) and the second flexible fastening device has a second containing space (18) downwardly recessed or pierced from the upper side of the main body (11), and the second flexible fastening device is disposed in the second containing space (18).

5. The multifunctional adaptor for windshield wiper (1) as recited in claim 4, wherein the second flexible fastening device includes a second flexible portion (151) and a second fastening portion (152), and the second flexible portion (151) is connected to the second fastening portion (152) and forms a second cavity (153), and the second fastening portion (152) further includes a second guiding surface (1521), and one end of the second flexible portion (151) is connected to a side wall of the second containing space (18) of the main body (11) near the lower side thereof, while the other end is extended toward the upper side of the main body (11) and connected to the second fastening portion (152), and the second fastening portion (152) protrudes from the second containing space (18), and the second guiding surface (1521) is toward the front end of the main body (11).

6. The multifunctional adaptor for windshield wiper (1) as recited in claim 1, wherein the fastening device is a flexible material.

7. The multifunctional adaptor for windshield wiper (1) as recited in claim 1, wherein the barb portion is respectively disposed at two sides of the windshield wiper arm (200, 400), and the protrusion portion (201, 401) is disposed to one end of the windshield wiper arm (200, 400).

8. An assembly using a multifunctional adaptor for a windshield wiper (1) comprising:
a windshield wiper adaptor (100, 300) comprising;
a main body (11);
a first lodging portion (12) and a second lodging portion (13) disposed at two sides of a rear end of the main body (11);
a first flexible fastening body (14) disposed to a front end of the main body (11), the first flexible fastening body (14) comprising a first flexible portion (141) and a first fastening portion (142), the first flexible portion (141) connected to the first fastening portion (142), a first cavity (143) formed at joint between the first flexible portion (141) and the first fastening portion (142), the first fastening portion (142) further comprising a first guiding surface (1421);
a second flexible fastening body (15) connected to a side of the main body (11), the second flexible fastening body (15) comprising a second flexible portion (151) and a second fastening portion (152), the second flexible portion (151) connected to the second fastening portion (152) and a second cavity (153) formed at joint between the second flexible portion (151) and the second fastening portion (152), the second fastening portion (152) further comprising a second guiding surface (1521); and
a windshield wiper arm (200, 400), two sides of the windshield wiper arm (200, 400) disposed with a first barb portion (202, 403) and a second barb portion (203, 404), an end of the windshield wiper arm (200, 400) disposed with a protrusion portion (201, 401).

9. The assembly using a multifunctional adaptor for a windshield wiper (1) as recited in claim 8, further comprising a containing portion (16) connected to the front end of the main body (11) to form a first containing space (17), the first flexible fastening body (14) located in the first containing space (17).

10. The assembly using a multifunctional adaptor for a windshield wiper (1) as recited in claim 9, wherein one end of the first flexible portion (141) is connected to a lower side of the front end of the main body (11) while the other end of the first flexible portion (141) is extended toward an upper side of the main body (11) and connected to the first fastening portion (142), and the first fastening portion (142) protrudes from the first containing space (17), and the first guiding surface (1421) is toward the rear end of the main body (11).

11. The assembly using a multifunctional adaptor for a windshield wiper (1) as recited in claim 8, wherein a side of the windshield wiper arm (200, 400) further has a through hole (402) piercing through the side.

12. The assembly using a multifunctional adaptor for a windshield wiper (1) as recited in claim 8, wherein a joint between the main body (11) and the second flexible fastening body (15) has a second containing space (18) downwardly recessed or pierced from the upper side of the main body (11), and the second flexible fastening body (15) is disposed in the second containing space (18).

13. The assembly using a multifunctional adaptor for a windshield wiper (1) as recited in claim 12, wherein one end of the second flexible portion (151) is connected to a side wall of the second containing space (18) of the main body (11) near a lower side thereof, while the other end of the second flexible portion (151) is extended toward the upper side of the main body (11) and connected to the second fastening portion (152), and the second fastening portion (152) protrudes from the second containing space (18), and the second guiding surface (1521) is toward the front end of the main body (11).

14. The assembly using a multifunctional adaptor for a windshield wiper (1) as recited in claim 8, wherein the first lodging portion (12) and the second lodging portion (13) are flexible materials.
